# EUROPÄISCHE PATENTSCHRIFT

(11) **EP 2 607 867 B1**
(45) Veröffentlichungstag und Bekanntmachung des Hinweises auf die Patenterteilung: **16.04.2014**
(21) Anmeldenummer: 11195138.0
(22) Anmeldetag: 22.12.2011
(51) Int. Cl.: G01G 19/42, B65G 1/04, G06Q 10/08

(54) **Lagereinrichtung und Verfahren zur Bestandsüberwachung für eine Lagereinrichtung**
Storage device and method for monitoring inventory for a storage device
Installation de stockage et procédé de surveillance des stocks pour une installation de stockage

(43) Veröffentlichungstag der Anmeldung: 26.06.2013
(73) Patentinhaber: Hänel GmbH & Co. KG, 74177 Bad Friedrichshall (DE)
(72) Erfinder: Wurm, Herman, 74223 Flein (DE)
(74) Vertreter: DREISS Patentanwälte PartG mbB

(56) Entgegenhaltungen:
- JP-A- 3 147 605
- JP-A- 59 150 314
- JP-A- 2007 215 575

## Beschreibung

Die Erfindung betrifft eine Lagereinrichtung, insbesondere ein Lagerregal, mit verbesserter Bestandserfassung beziehungsweise Bestandsüberwachung für das einzulagernde Lagergut. Eine Lagereinrichtung sieht meist eine Vielzahl von Lagerplätzen vor, auf welchen Lagergutträger oder Lagerbehälter für Lagergut vorgesehen werden können. Ferner ist in der Regel eine Ladeöffnung vorgesehen, über welche zur Entnahme beziehungsweise Ablage von Lagergut Zugriff auf die Lagergutträger erfolgen kann.

Die Bestandsüberwachung und Bestandsverwaltung einer Lagereinrichtung, in der eine große Anzahl verschiedener Teile von Lagergut gelagert wird, ist regelmäßig mit großem Aufwand verbunden. So ist grundsätzlich eine Erfassung notwendig, welche Art von Lagergut in einem bestimmten Lagergutträger beziehungsweise Lagerbehälter eingelagert ist und wie groß die Menge beziehungsweise Anzahl für das jeweilige Lagergut ist. Um zu einem späteren Zeitpunkt nach der Erfassung festzustellen, wie groß die jeweiligen Bestände des Lagergutes sind, wird meist ausgehend von den erfassten Beständen unter Verwendung einer Bilanz von Zu- und Abgängen des jeweiligen Lagergutes der aktuelle Bestand gezählt bzw. errechnet. Dadurch kann sich eine hohe Fehleranfälligkeit der Bestandsüberwachung ergeben, da sich einerseits Fehler bei der Erfassung der Lagerbestände in die Zukunft fortpflanzen und andererseits die Bilanzierung der Zu- und Abgänge sowie die Hochrechnung auf den aktuellen Bestand weitere Fehlerquellen darstellen. In der Praxis wird dem dadurch Rechnung getragen, dass von Zeit zu Zeit eine Inventur der Lagerbestände durchgeführt wird, was regelmäßig aufwändig ist, Arbeitskraft bindet und in vielen Betrieben ein unerwünscht hoher Kostenfaktor ist.

Aus der US 3,605,089 ist es bekannt, für eine Lagereinrichtung eine Waage für jeden Lagerort vorzusehen. Dies ist insbesondere dann vorteilhaft, wenn an einem Lagerort in einem Lagergutträger jeweils eine Mehrzahl von Teilen gelagert werden, für die jeweils das Einzelgewicht bekannt ist. Aus dem mit der jeweiligen Waage gemessenen Gesamtgewicht in einem Lagergutträger lässt sich dann die Gesamtzahl bzw. Menge des jeweiligen Lagergutes ermitteln. Dadurch wird eine "ständige Inventur" für jeden einzelnen Lagergutträger ermöglicht. Nachteilig an dieser Vorgehensweise kann es sein, dass eine große Zahl an Waagen erforderlich ist, für die jeweils Maßnahmen zur Energieversorgung, Verschaltung, Ansteuerung sowie Kommunikation mit einer Steuereinrichtung oder Ähnliches getroffen werden müssen. Dies kann mit Konstruktionsaufwand und hohen Kosten verbunden sein.

In der EP 1 319 173 B1 ist für eine Lagereinrichtung ein Entnahmeträger mit zwei Waagen beschrieben, mit welchen Gewichtskraftmessungen an zwei definierten Orten des Entnahmeträgers vorgenommen werden können. Aufgrund der definierten geometrischen Verhältnisse kann das Gewicht eines an einem bestimmten Ort abgesetzten Lagergutträgers über die Betrachtung eines Kräfte- beziehungsweise Drehmomentgleichgewichtes mit nur zwei Waagen bestimmt werden. Problematisch an dieser Vorgehensweise ist, dass der Ort, an dem der Lagergutträger auf den Entnahmeträger abgesetzt wird, mit vergleichsweise hoher Genauigkeit bekannt sein muss. Dies macht in der Regel den Einsatz von Lagergutträgern mit bestimmten bekannten Abmessungen erforderlich, was eine Einschränkung der Verwendungsmöglichkeiten darstellt.

Aus der DE 78 35 660 U1 ist es bekannt, vor einem Regal eine an einem Gerüst verschiebbare Waage mit einer Einrichtung zum Drucken des Preises der entnommenen Ware vorzusehen.

Aus der JP 59 150314 A ist es bekannt, einen Lagergutträger auf eine Wiegeeinrichtung zu verlagern und das Gesamtgewicht der darin vorhandenem Lagergüter zu messen.

Aus der JP 2007 215575 ist ein automatisches medizinisches Versorgungssystem bekannt. Aus der JP 3 147605 A ist ein auf Wiegetechnik basierendes Lager-Management-Gerät bekannt.

Bei der Bestimmung der Anzahl eines Lagergutes über das Gewicht ist es grundsätzlich erwünscht, Fehlerquellen bei der Gewichtsbestimmung möglichst auszuschließen, da sich diese in einer Fehleinschätzung der Lagerbestände auswirken. Eine mögliche Fehlerquelle ist dabei grundsätzlich der Bediener der Lagereinrichtung (z.B. Gewichtsverfälschung aufgrund von Belastung eines Lagergutträgers durch eine Bedienperson).

Der Erfindung liegt die Aufgabe zugrunde, eine kostengünstige und flexibel an verschiedene Lagersysteme anpassbare Bestandsüberwachung zu ermöglichen, bei welcher insbesondere die Bediensicherheit und Überwachungssicherheit des Bestandes erhöht ist, sowie der Schutz von Bedienpersonen gegenüber von der Lagereinrichtung ausgehenden Gefahren berücksichtigt wird.

Diese Aufgabe wird durch eine Lagereinrichtung gemäß dem Anspruch 1 gelöst. Hierbei handelt es sich um eine Lagereinrichtung mit insbesondere in oder auf Sammelträgern anordenbaren Lagerbehältern/Lagergutträgern für Lagergut, welche eine Ladeöffnung aufweist, über welche zur Entnahme beziehungsweise Ablage von Lagergut ein Zugriff auf die Lagergutträger möglich ist. Dabei ist eine im Bereich der Ladeöffnung verlagerbare, insbesondere verfahrbare, Wiegeeinrichtung zur Gewichtsmessung vorgesehen, wobei der Wiegeeinrichtung ein Lagergutträger aus der Ladeöffnung zur Messung seines Gewichts zuführbar ist, insbesondere auf die Wiegeeinrichtung gezogen werden kann. Außerdem ist eine Steuereinrichtung vorgesehen, in welcher für einen der Wiegeeinrichtung zugeführten Lagergutträger diesem zugeordnete Informationen, insbesondere hinsichtlich des entnommenen oder abgelegten Lagergutes oder des mittels der Wiegeeinrichtung messbaren bzw. gemessenen Gewichts des Lagergutträgers oder des Lagergutes hinterlegbar sind, so dass bei jedem Zugriff durch die Steuereinrichtung eine Bestandsführung des Lagergutes erfolgen kann. Die in der Steuereinrichtung hinterlegbaren Informationen betreffen insbesondere den Bestand (Menge, Gewicht, usw.) eines jeweiligen Lagergutes in einem jeweiligen Lagergutträger.

Mittels der Wiegeeinrichtung kann daher der Lagergutträger nach Entnahme beziehungsweise Ablage von Lagergut gewogen werden. Ist für das Lagergut ein Einzelgewicht einer Einheit bekannt, so kann dann die entnommene Menge/Anzahl bestimmt werden und die verbleibende Menge/Anzahl an Lagergut im Lagergutträger berechnet werden. Denkbar ist auch, vor der Entnahme beziehungsweise Ablage von Lagergut einen zusätzlichen Wiegeschritt durchzuführen, um eventuelle Ungenauigkeiten hinsichtlich des vorgegebenen Einzelgewichtes ausgleichen zu können.

Somit kann mit der erfindungsgemäßen Lagereinrichtung eine "ständige Inventur" dadurch ermöglicht werden, dass die Zu- und Abgänge an Lagergut ständig überwacht werden. Dabei wird nur eine Waage benötigt. Insofern können die Kosten und der Bauaufwand für weitere Wiegeeinrichtungen eingespart werden. Aus den in der Steuereinrichtung hinterlegten Informationen, inbesondere über das Gewicht des gewogenen Lagergutträgers, kann die aktuelle Menge von Lagergut im Lagergutträger bestimmt werden. Hierzu können beispielsweise ebenfalls in der Steuereinrichtung hinterlegbare Informationen über das Einzelgewicht von Einheiten des jeweiligen Lagerguts herangezogen werden. Vorteilhaft kann es auch sein, vor der Entnahme bzw. Ablage von Lagergut aus bzw. in einem Lagergutträger, welcher der Wiegeeinrichtung zugeführt ist, einen zusätzlichen Wiegeschritt für diesen Lagergutträger durchzuführen. Dadurch kann das Ausgangsgewicht des Lagergutträgers und damit die Ausgangsmenge an Lagergut vor der Entnahme bzw. Ablage bestimmt werden und gegebenenfalls mit hinterlegten Informationen verglichen werden.

Die Bestimmung der entnommenen Menge an Lagergut erfolgt zunächst nur für denjenigen Lagergutträger, für den eine Entnahme beziehungsweise Ablage von Lagergut erfolgt. Vorteilhafterweise sind in der Steuereinrichtung und/oder einer zugeordneten Speichereinrichtung Informationen hinsichtlich aller Lagergutträger der Lagereinrichtung hinterlegbar. Dadurch kann eine permanente Bestandsführung bzw. ständige Inventur des Bestands aller Lagergutträger erzielt werden. Dies trägt dazu bei, die Fehleranfälligkeit der Bestandsführung bzw. Bestandsüberwachung erheblich zu verringern.

Es ist dabei nicht erforderlich, dass jeder einzelne Lagergutträger dauernd überwacht wird. Die aktuelle Menge eines bestimmten Lagergutes kann einer ständig aktualisierten Bilanz entnommen werden, die beispielsweise ebenfalls in der Steuereinrichtung geführt und dort und/oder in einer zugeordneten Speichereinrichtung hinterlegt ist. Dies ist insbesondere dann vorteilhaft, wenn es sich bei dem Lagergut um Kleinteile handelt, von welchen regelmäßig eine Vielzahl in einem Lagergutträger abgelegt werden soll.

Die Steuereinrichtung kann insbesondere einen Rechner aufweisen, mittels welchem Rechenoperationen zur Ermittlung einer Bestandsgröße des Lagergutes (z.B. Gewicht, Menge, usw.) durchführbar sind. Vorteilhaft ist außerdem, wenn die Steuereinrichtung die Verlagerung der Wiegeeinrichtung derart steuert, dass die Wiegeeinrichtung zu einer jeweils geeigneten Entnahmeposition verlagert wird.

Die Ladeöffnung der Lagereinrichtung ist insbesondere derart ausgebildet, dass eine Entnahme beziehungsweise Ablage über einen sich über eine Entnahmebreite insbesondere horizontal erstreckenden Bereich möglich ist. Insbesondere erfolgt die Entnahme über einen sich horizontal erstreckenden Ladebalken, an welchen der Lagergutträger zur Entnahme beziehungsweise Ablage von Lagergut heranführbar ist und von welchem aus der Lagergutträger zugänglich ist. Die Wiegeeinrichtung ist insbesondere in der Ladeöffnung verlagerbar beziehungsweise verfahrbar, vorteilhafterweise über die gesamte Entnahmebreite oder entlang des gesamten Ladebalkens verlagerbar.

Eine Lagereinrichtung kann insbesondere dazu ausgebildet sein, eine Mehrzahl von Sammelträgern aufzunehmen, in welchen jeweils mehrere Lagergutträger, insbesondere horizontal nebeneinander, anordenbar sind. Soll ein Lagergut einem bestimmten Lagergutträger zugeführt oder diesem entnommen werden, so kann die Wiegeeinrichtung in der Ladeöffnung derart zu einer geeigneten Entnahmeposition verlagert werden, dass der gewünschte Lagergutträger bequem von dem jeweiligen Sammelträger aus der Wiegeeinrichtung zugeführt werden kann.

Unter einer Wiegeeinrichtung ist im vorliegenden Zusammenhang ein beliebiges Mittel oder eine Vorrichtung zur Bestimmung der auf eine Wirkfläche wirkenden Gewichtskraft zu verstehen. Es muss sich nicht um eine Waage im klassischen Sinne handeln.

Zur weiteren Ausgestaltung der Lagereinrichtung ist vorgesehen, dass in der Steuereinrichtung und/oder in einer hierzu vorgesehenen Speichereinrichtung Informationen hinsichtlich des entnommenen oder abgelegten Lagergutes für jeden der Lagergutträger hinterlegbar sind. Denkbar ist außerdem, dass in der Steuereinrichtung Informationen über den Bestand (Menge, Gewicht, usw.) eines jeweiligen Lagergutes in sämtlichen Lagergutträgern hinterlegbar sind. Damit wird der gesamte Bestand der Lagereinrichtung automatisch und weitgehend unanfällig gegen Bilanzierungsfehler überwacht.

Die erfindungsgemäße Lagereinrichtung wird dadurch weiter ausgestaltet, dass eine Lichtschrankeneinrichtung zur Detektion von sich im Bereich der Ladeöffnung befindlichen Hindernissen vorgesehen ist. Durch die Lichtschrankeneinrichtung kann ein ungewollter Zugriff einer Bedienperson in die Ladeöffnung erkannt werden. Auch können Verfälschungen der Gewichtsmessung beispielsweise durch Abstützen der Bedienperson auf dem Lagergutträger vermieden werden. Insbesondere ist die Lichtschrankeneinrichtung derart an der Ladeöffnung oder an der Vorrichtung angeordnet, dass ein Zugriff einer Bedienperson auf einen Lagergutträger und/oder auf die Wiegeeinrichtung detektierbar ist.

Besonders vorteilhaft ist es, wenn die Lichtschrankeneinrichtung eine Vielzahl von Lichtschranken mit parallel in oder an der Ladeöffnung verlaufendem Strahlengang umfasst. Dadurch kann eine Art "Lichtvorhang" gebildet werden, mittels welchem die Ladeöffnung vollständig überwachbar ist.

Eine vorteilhafte Ausgestaltung ergibt sich auch dadurch, dass ein Laserscanner zur Erkennung von Hindernissen im Bereich der Ladeöffnung und/oder zur Erkennung einer Position eines Lagergutträgers oder einer Zugriffsposition auf einen Lagergutträger vorgesehen ist. Dadurch kann beispielsweise festgestellt werden, ob eine Bedienperson einen anderen als den gewünschten Lagergutträger der Wiegeeinrichtung zuführt. Auch kann erkannt werden, an welcher Position ein Lagergutträger aus einem Sammelträger herausgezogen wurde. Ferner kann abgeglichen werden, ob der entnommene Lagergutträger mit dem zum Beispiel über eine Bedieneinrichtung angeforderten Lagergutträger übereinstimmt.

Mittels des Laserscanners ist insbesondere feststellbar, ob der bestimmte, gewünschte, Lagergutträger z.B. aus einem Sammelträger herausgezogen wurde. Ebenso kann mittels des Laserscanners eine Auswahl eines falschen Lagergutträgers erkannt werden und z.B. Maßnahmen zur Abgabe eines Hinweissignals ausgelöst werden.

Insbesondere ist der Laserscanner über Kommunikationsmittel (z.B. Datenleitung oder drahtlose Kommunikationsverbindung) mit der Steuereinrichtung verbunden. Die Steuereinrichtung ist insbesondere dazu ausgebildet, aufgrund der von dem Laserscanner übermittelten Information hinsichtlich der Position eines Lagergutträgers zu ermitteln, ob ein ausgewählter Lagergutträger (der z.B. über die Steuereinrichtung angefordert bzw. ausgewählt werden kann) der Wiegeeinrichtung zugeführt ist.

Mittels des Laserscanners ist es also möglich, eine fehlerhafte Erfassung von zugeführtem oder abgelegtem Lagergut zu verhindern, was sich in einem fehlerhaften Abbild des Bestandes in der Lagereinrichtung bzw. einer fehlerhaften Bilanz auswirken würde. Der Laserscanner kann zusätzlich zu der oben genannten Lichtschrankeneinrichtung vorgesehen sein.

Der Laserscanner ist insbesondere derart an der Lagereinrichtung angeordnet, dass eine Hinderniserkennung beziehungsweise Überwachung eines Bereiches zwischen einem Sammelträger der Lagereinrichtung, in welchem mehrere Lagergutträger aufnehmbar sind, und der Wiegeeinrichtung erfolgen kann.

Denkbar ist auch, zusätzlich oder an Stelle des Laserscanners eine Lichtschrankeneinrichtung zur Überwachung eines Bereiches zwischen einem Sammelträger der Lagereinrichtung und der Wiegeeinrichtung vorzusehen. Diese Lichtschrankeneinrichtung kann auch zusätzlich zu der oben genannten Lichtschrankeneinrichtung (welche der Überwachung auf einen Zugriff in die Ladeöffnung dient) vorgesehen sein.

Für die weitere Lichtschrankeneinrichtung ist es vorteilhaft, wenn sie eine Mehrzahl von Lichtschranken mit insbesondere parallel verlaufendem Strahlengang aufweist. Vorzugsweise verlaufen die Strahlengänge der mehreren Lichtschranken parallel nebeneinander vertikal in der Ladeöffnung, insbesondere im Bereich zwischen dem Sammelträger und der Wiegeeinrichtung. Die verschiedenen Lichtschranken sind insbesondere horizontal nebeneinander entlang der Verlagerungsrichtung der Wiegeeinrichtung versetzt angeordnet. Dadurch kann erfasst werden, an welcher horizontalen Position ein Lagergutträger aus dem Sammelträger herausgezogen wurde.

Eine bevorzugte Ausgestaltung der Lagereinrichtung ergibt sich dadurch, dass der Lagergutträger zur Zufuhr zu der Wiegeeinrichtung in eine Zufuhrrichtung bewegbar ist, und dass die Wiegeeinrichtung entlang einer, insbesondere horizontal verlaufenden, Verlagerungsrichtung verlagerbar ist, wobei die Zufuhrrichtung und die Verlagerungsrichtung senkrecht zueinander verlaufen. Insbesondere spannen die Zufuhrrichtung und die Verlagerungsrichtung eine horizontale Ebene auf. Bei dieser Ausgestaltung kann der Lagergutträger aus der Ladeöffnung komfortabel auf die Wiegeeinrichtung gezogen werden, indem eine Zugkraft in Zufuhrrichtung ausgeübt wird. Umgekehrt kann nach der Entnahme beziehungsweise Ablage von Lagergut der Lagergutträger bequem in die Lagereinrichtung zurückgeschoben werden.

Zur Aufnahme des zu wiegenden Lagergutträgers weist die Wiegeeinrichtung vorteilhafterweise eine Wiegefläche auf. Diese kann insbesondere als ebene Wiegeplattform ausgebildet sein, deren Abmessungen an die Größe einer Auflagefläche eines (insbesondere des größten) aufzunehmenden Lagergutträgers angepasst ist.

Zur weiteren Ausgestaltung ist vorgesehen, dass die Wiegeeinrichtung eine zum Start einer Gewichtsmessung betätigbare Bestätigungseinrichtung, z.B. eine Taste aufweist. Da der Wiegevorgang für den Lagergutträger erst dann gestartet wird, wenn eine Betätigung der Bestätigungseinrichtung erfolgt ist, kann eine fehlerhafte Gewichtsbestimmung vermieden werden. Typische Fehlerquellen bei der Gewichtsbestimmung können sich daraus ergeben, dass der Lagergutträger vor Beginn des Wiegevorgangs nicht vollständig auf die Wiegeeinrichtung verlagert wurde, oder dass sich die Bedienperson während des Wiegevorgangs noch auf dem Lagergutträger abstützt. Diese Fehlerquellen können weitgehend dadurch ausgeräumt werden, dass vor Start des Wiegevorgangs die Bestätigungseinrichtung zu betätigen ist.

Vorteilhaft kann es jedoch auch sein, wenn nach Zufuhr des Lagergutträgers zur Wiegeeinrichtung - insbesondere automatisch ausgelöst - eine erste Gewichtsmessung erfolgt, um die Ausgangsmenge an Lagergut zu bestimmen. Nach der Entnahme bzw. Ablage wird dann vorteilhafterweise eine zweite Gewichtsmessung dadurch ausgelöst, dass die Bestätigungseinrichtung betätigt wird.

Die Wiegeeinrichtung kommuniziert vorzugsweise mit der Steuereinrichtung, so dass ausgelöst durch eine Betätigung der Bestätigungseinrichtung eine Gewichtsmessung erfolgt und die Messergebnisse der Steuereinrichtung übermittelt werden können. Dort oder in einer zugeordneten Speichereinrichtung können die Messergebnisse dann hinterlegt werden. Dadurch wird sichergestellt, dass jeder Wiegevorgang bei der Bestandsführung bzw. Bestandsüberwachung automatisch berücksichtigt wird.

Zur Führung der Verlagerung der Wiegeeinrichtung ist vorteilhafterweise eine Führungseinrichtung vorgesehen, wobei die Führungseinrichtung insbesondere sich entlang einer Verlagerungsrichtung erstreckend ausgebildet ist, in welche die Wiegeeinrichtung verlagerbar ist. Die Führungseinrichtung kann als Schiene oder Leitstange ausgebildet sein, wobei die Wiegeeinrichtung dementsprechend einen Schlittenabschnitt aufweist oder die Wiegeeinrichtung an/auf einem Schlitten angeordnet ist, welcher auf der Schiene oder Leitstange durch Gleiten oder Rollen verlagerbar ist.

Zur Erhöhung der Sicherheit sind die Wiegeeinrichtung und die Führungseinrichtung vorteilhafterweise so ausgebildet, dass etwaige, zwischen der Wiegeeinrichtung und der Führungseinrichtung auftretende Spalte eine Sicherheitsspaltbreite nicht überschreiten. Diese kann beispielsweise kleiner als eine Fingerbreite, insbesondere kleiner als sechs Millimeter gewählt werden.

Vorteilhaft ist dabei auch, wenn die Wiegeeinrichtung an einem oder mehreren ihrer Randabschnitte schräg zur Verlagerungsrichtung verlaufende Anfahrschrägen aufweist. Insbesondere verlaufen die Anfahrschrägen ausgehend von der Wiegeeinrichtung schräg auf eine Leitfläche, insbesondere eine dem Bediener zugewandte Oberfläche, der Leiteinrichtung zu.

Durch die genannten Ausgestaltungen kann vermieden werden, dass bei der Verlagerung der Wiegeeinrichtung ein Spalt, zum Beispiel zwischen der Wiegeeinrichtung und einer Wandung der Ladeöffnung oder der Lagereinrichtung oder einem Lagergutträger, gebildet wird, in welchen Gegenstände oder beispielsweise die Hand einer Bedienperson eingeklemmt werden können. Dies trägt dazu bei, die Gefahr der Beschädigung von Gegenständen oder die Verletzungsgefahr für eine Bedienperson zu verringern.

Eine bevorzugte Ausgestaltung der Erfindung ergibt sich dadurch, dass eine Mitnehmereinrichtung zum Verlagern der Wiegeeinrichtung vorgesehen ist. Die Mitnehmereinrichtung ist vorzugsweise von der Steuereinrichtung ansteuerbar. Wird beispielsweise über die Steuereinrichtung ein bestimmter Lagergutträger zur Entnahme oder Ablage von Lagergut angefordert, so kann die Wiegeeinrichtung mittels der Mitnehmereinrichtung automatisch zu der geeigneten Entnahmeposition verlagert werden. Eine Entnahme bzw. Ablage aus bzw. in einem falschen Lagergutträger wird dadurch vermieden.

Die Mitnehmereinrichtung kann an der Wiegeeinrichtung selbst angeordnet sein, zum Beispiel in der Art eines Elektromotors, welcher Rollen der Wiegeeinrichtung antreibt, welche auf einer Führungseinrichtung rollen. Andererseits kann die Mitnehmereinrichtung auch an übrigen Teilen oder Bereichen der Lagereinrichtung angeordnet sein und mit der Wiegeeinrichtung zusammenwirken. So kann beispielsweise die Wiegeeinrichtung an einem in der Ladeöffnung umlaufenden Mitnehmerriemen angeordnet sein oder in diesen eingreifen, wobei die Lagereinrichtung für den Mitnehmerriemen einen Riemenantrieb aufweist.

Andererseits kann es auch vorteilhaft sein, wenn die Wiegeeinrichtung manuell verschiebbar ausgebildet ist. Dies erlaubt eine kostensparende Lösung.

Zur Erhöhung der Betriebssicherheit ist vorteilhafterweise vorgesehen, dass die genannte Mitnehmereinrichtung über eine Kupplungseinrichtung mit der Wiegeeinrichtung zusammenwirkt, wobei mittels der Kupplungseinrichtung - insbesondere bei Überschreiten einer vorgebbaren Grenzkraft für die Verlagerung der Wiegeeinrichtung - die Wiegeeinrichtung von der Mitnehmereinrichtung abkuppelbar ist. Beispielsweise kann ein Antrieb für die Wiegeeinrichtung über eine Rutschkupplung wirken, welche bei einer bestimmten Grenzkraft abkuppelt. Dadurch wird die Gefahr von Verletzung und/oder Beschädigung verringert, da eine Verlagerung der Wiegeeinrichtung mit aufliegendem Lagergutträger unterbunden wird.

Zur weiteren Ausgestaltung weist die Wiegeeinrichtung eine Kommunikationseinrichtung zum Austausch von Informationen hinsichtlich des zu entnehmenden oder abzulegenden Lagergutes, insbesondere Gewicht, mit der Steuereinrichtung auf. Aus den der Steuereinrichtung übermittelten Informationen können dann unter Zuhilfenahme von hinterlegten Informationen über das Einzelgewicht von Einheiten des Lagergutes die jeweilige Menge an Lagergut berechnet werden. Die Kommunikationseinrichtung ist vorteilhafterweise drahtlos ausgebildet, zum Beispiel als Bluetooth- oder WLAN-(wireless LAN)-Verbindung.

Sinnvoll ist es, für die Wiegeeinrichtung eine eigene elektrische Energieversorgung zum Betrieb der Wiegeeinrichtung vorzusehen. Die elektrische Energieversorgung kann insbesondere von der übrigen Lagereinrichtung elektrisch unabhängig sein. Dadurch kann eine Verkabelung der Wiegeeinrichtung eingespart werden, was den Bauaufwand vereinfacht, da die Wiegeeinrichtung verlagerbar ausgebildet ist. Insbesondere dann, wenn die Wiegeeinrichtung auch Kommunikationsmittel zur drahtlosen Kommunikation mit der Steuereinrichtung aufweist, kann die Wiegeeinrichtung ohne jede Verkabelung auskommen.

Die Energieversorgung kann beispielsweise von einem Akku gebildet werden. Denkbar ist aber auch eine Einrichtung, mittels welcher aus einer mit der Verlagerung der Wiegeeinrichtung verbundenen Bewegung elektrische Energie gewonnen werden kann (beispielsweise Dynamo oder Bewegungssensor).

Zur weiteren Ausgestaltung der Lagereinrichtung kann vorgesehen sein, dass die Wiegeeinrichtung und/oder die Mitnehmereinrichtung derart ausgebildet ist, dass die Verlagerung der Wiegeeinrichtung unterbunden wird, wenn der Wiegeeinrichtung ein Lagergutträger zugeführt ist. Denkbar ist insbesondere, dass die Wiegeeinrichtung lösbar auslösbare Arretiermittel aufweist und dass ein Grenzgewicht vorgebbar ist, wobei die Wiegeeinrichtung derart ausgebildet ist, dass die Arretiermittel zur Arretierung auslösbar sind, wenn ein das Grenzgewicht überschreitendes Gewicht durch die Wiegeeinrichtung gemessen wird. Dann wird die Verlagerung der Wiegeeinrichtung blockiert, was sowohl für manuell, als auch für automatisch verlagerbare Wiegeeinrichtungen möglich ist. Bei einer mittels einer Mitnehmereinrichtung verlagerbaren Wiegeeinrichtung kann ein entsprechender Effekt durch eine Kupplungseinrichtung zwischen der Wiegeeinrichtung und der Mitnehmereinrichtung erzielt werden, wie oben erläutert.

Für die Lagereinrichtung kann zur weiteren Ausgestaltung eine aktivierbare und deaktivierbare Signaleinrichtung vorgesehen sein, welche von der Steuereinrichtung zur Abgabe eines Warnsignals aktivierbar ist, wenn ein anderer als ein ausgewählter Lagergutträger der Wiegeeinrichtung zugeführt wurde und/oder wenn ein Zugriff auf einen anderen als einen ausgewählten Lagergutträger erfolgt. Unter einem ausgewählten Lagergutträger ist beispielsweise derjenige Lagergutträger zu verstehen, welcher ein gewünschtes Lagergut enthält. Dies kann beispielsweise an der Steuer- oder Bedieneinrichtung der Lagereinrichtung eingegeben werden, worauf der gewünschte Lagergutträger der Ladeöffnung zugeführt wird. Durch die genannte Maßnahme wird die Überwachungssicherheit weiter erhöht, da eine Bedienperson durch das Warnsignal auf eine eventuelle Entnahme aus einem falschen Lagergutträger aufmerksam gemacht wird.

Besonders vorteilhaft ist es, wenn die Lagereinrichtung derart ausgebildet ist, dass eine Gewichtsmessung mit der Wiegeeinrichtung nur dann erfolgen kann, sofern die genannte Bestätigungseinrichtung betätigt wurde und/oder mittels der genannten Lichtschrankeneinrichtung beziehungsweise mittels des genannten Laserscanners kein Hindernis detektiert wird und/oder mittels des Laserscanners erkannt wird, dass der gewünschte (d.h. ein ausgewählter) Lagergutträger der Wiegeeinrichtung zugeführt wurde. Um dies zu ermöglichen, können die genannten Bestandteile der Lagereinrichtung mit der Steuereinrichtung zusammenwirken. Vorzugsweise wird auch eine Hinterlegung von Informationen in der Steuereinrichtung dann unterbunden, wenn ein anderer als ein ausgewählter Lagergutträger der Wiegeeinrichtung zugeführt wird. Insbesondere ist die Steuereinrichtung dementsprechend ausgebildet, so dass eine Gewichtsmessung von der Steuereinrichtung nur dann ausgelöst wird, wenn die oben genannten Bedingungen erfüllt sind bzw. wenn der ausgewählte Lagergutträger herausgezogen wurde. Durch dieses Zusammenspiel können Falschmessungen, und damit fehlerhafte Bestandsüberwachungen weitgehend vermieden werden.

Vorteilhafterweise ist die Wiegeeinrichtung und/oder die Ladeöffnung derart ausgebildet, dass eine Zufuhr eines ausgewählten Lagergutträgers zur Wiegeeinrichtung nur dann möglich ist, wenn die Wiegeeinrichtung zu einer dem ausgewählten Lagergutträger zugeordneten Entnahmeposition verfahren ist. Durch die genannte Maßnahme wird eine Entnahme eines anderen, nicht ausgewählten Lagergutträgers, blockiert. Damit wird eine Entnahme beziehungsweise Ablage von Lagergut in einen anderen als den erwünschten Lagergutträger unterbunden und die Überwachungssicherheit erhöht. Zu dem genannten Zweck kann die Lagereinrichtung eine Sperrvorrichtung aufweisen, welche eine Zufuhr eines Lagergutträgers zur Wiegeeinrichtung blockiert, sofern die Wiegeeinrichtung nicht zu einer diesem Lagergutträger zugeordneten Entnahmeposition verlagert ist.

Die eingangs gestellte Aufgabe wird auch gelöst durch ein Verfahren zur Überwachung des Bestandes an Lagergut für eine Lagereinrichtung mit in Sammelträgern vorsehbaren Lagerbehältern für Lagergut und mit einer Ladeöffnung, über welche zur Entnahme beziehungsweise Ablage von Lagergut Zugriff auf die Lagerbehälter beziehungsweise Lagergutträger erfolgen kann, und mit einer im Bereich der Ladeöffnung verlagerbaren Wiegeeinrichtung, welcher ein Lagergutträger aus der Ladeöffnung zur Messung seines Gewichtes zuführbar ist. Dabei umfasst das Verfahren die folgenden Schritte, insbesondere in der wiedergegebenen Reihenfolge: Auswahl eines insbesondere frei vorgebbaren Lagergutträgers; Heranführen eines Sammelträgers, welcher der vorgegebenen bzw. ausgewählten Lagergutträger enthält, zu der Ladeöffnung; Verlagern der Wiegeeinrichtung zu einer dem ausgewählten Lagergutträger zugeordneten Entnahmeposition; Zufuhr des Lagergutträgers zur Wiegeeinrichtung; Entnahme oder Ablage von Lagergut aus oder in dem Lagergutträger; Messung des Gewichtes des Lagergutträgers.

Mit dem erfindungsgemäßen Verfahren kann eine ständige Überwachung des Bestands erzielt werden und daher die Bestandssicherheit erhöht werden, wie vorstehend im Zusammenhang mit der erfindungsgemäßen Lagereinrichtung erläutert. Insbesondere ist das Verfahren speziell zum Betrieb der erfindungsgemäßen Lagereinrichtung ausgelegt.

Die Auswahl eines gewünschten Lagergutträgers kann beispielsweise an der oben genannten Steuereinrichtung oder an einer Bedieneinrichtung der Lagereinrichtung erfolgen. Handelt es sich beispielsweise um ein Lagerregal, in welchem mehrere Sammelträger mit jeweils einer Mehrzahl von nebeneinander angeordneten Lagergutträgern gelagert sind, so wird der Sammelträger, in welchem sich der ausgewählte Lagergutträger befindet, in einen der Ladeöffnung zugänglichen Bereich der Lagereinrichtung bewegt. In diesem Fall ist die geeignete Entnahmeposition dann derjenige Bereich der Ladeöffnung, welcher dem ausgewählten Lagergutträger auf dem Sammelträger möglichst nahe liegt.

Die Wiegeeinrichtung kann dann automatisch zu der Entnahmeposition verlagert werden. Denkbar ist jedoch auch, dass die Entnahmeposition mittels einer Leiteinrichtung, insbesondere durch ein Lichtsignal in oder an der Ladeöffnung, angezeigt wird und die Wiegeeinrichtung manuell dorthin verlagert wird.

Nach einer Entnahme beziehungsweise Ablage von Lagergut und der Gewichtsmessung kann der Bestand an Lagergut ermittelt und insbesondere abgespeichert werden.

Das Verfahren wird dadurch weiter ausgestaltet, dass eine erste Gewichtsmessung vor der Entnahme oder Ablage von Lagergut erfolgt und eine zweite Gewichtsmessung nach der Entnahme oder Ablage von Lagergut erfolgt. Dies ermöglicht eine Erhöhung der Genauigkeit der Bestandsüberwachung insbesondere dann, wenn das Einzelteilgewicht einer Einheit des Lagergutes nur mit einer gewissen Ungenauigkeit bekannt ist.

Eine bevorzugte Ausgestaltung des Verfahrens ergibt sich dadurch, dass ein Warnsignal abgegeben wird, wenn ein anderer als der ausgewählte Lagergutträger der Wiegeeinrichtung zugeführt wird. Hierzu weist die Lagereinrichtung insbesondere eine Warneinrichtung beziehungsweise eine optische oder akustische Signaleinrichtung auf.

Durch die genannten Maßnahmen bei der erfindungsgemäßen Lagereinrichtung und dem erfindungsgemäßen Verfahren, insbesondere die Überwachung mit einem Lichtvorhang auf Zugriff während eines Wiegevorgangs, die Überprüfung mit dem Laserscanner, ob der gewünschte oder ein falscher Lagergutträger ausgewählt wurde, sowie eine ggf. automatische Verlagerung der Wiegeeinrichtung zu der gewünschten Entnahmeposition, kann die Bediensicherheit und Überwachungssicherheit der Lagereinrichtung drastisch erhöht werden. Fehler in der Bestandsführung, z.B. durch Entnahme aus einem falschen Lagergutträger, werden nahezu narrensicher vermieden.

Weitere Einzelheiten und vorteilhafte Ausgestaltungen der Erfindung sind der nachfolgenden Beschreibung zu entnehmen, anhand derer die in den Figuren dargestellte Ausführungsform der Erfindung näher beschrieben und erläutert wird.

Es zeigen:
- Figur 1: eine Ausführungsform einer erfindungsgemäßen Lagereinrichtung in Frontansicht;
- Figur 2: einen Querschnitt durch die Lagereinrichtung gemäß Figur 1;
- Figur 3: eine Detailansicht der Lagereinrichtung gemäß Figur 1.

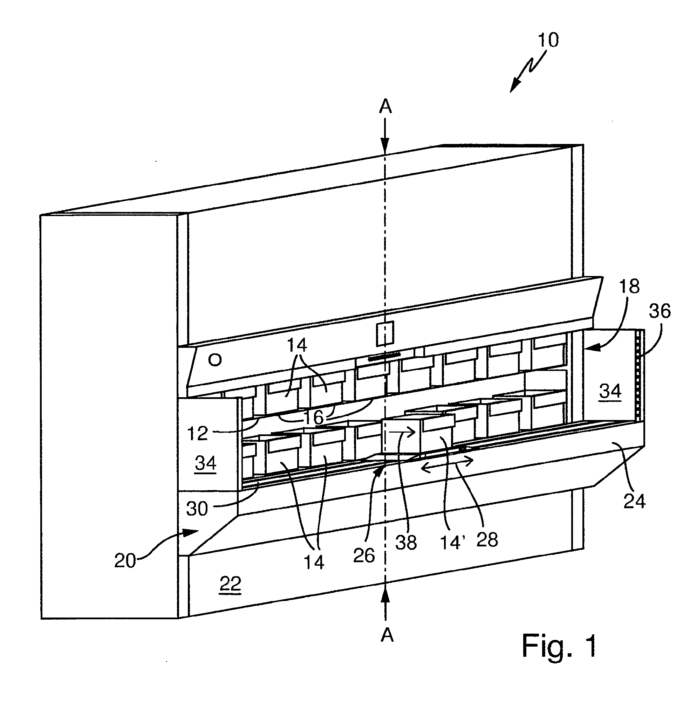

In den Figuren 1 bis 3 ist eine erfindungsgemäße Lagereinrichtung 10 dargestellt, wobei in sämtlichen Figuren für einander entsprechende Teile der Lagereinrichtung 10 dieselben Bezugszeichen verwendet werden.

Die Lagereinrichtung 10 ist als Lagerregal ausgebildet, in welchem eine Mehrzahl von Sammelträgern 12 angeordnet werden können. Jeder Sammelträger 12 nimmt eine Mehrzahl von Lagergutträgern 14 auf, welche auf dem Sammelträger 12 nebeneinander auf jeweils zugeordneten Lagerplätzen 16 angeordnet werden können.

Die Lagergutträger 14 sind als Lagerbehälter ausgebildet, in welchen jeweils eine Vielzahl von insbesondere kleinteiligem Lagergut abgelegt werden können (nicht dargestellt).

Bei der Lagereinrichtung 10 ist eine Ladeöffnung 18 vorgesehen, über welche ein Zugriff auf die im Lagerregal 10 gelagerten Lagerbehälter 14 erfolgen kann. Im Bereich der Ladeöffnung 18 weist die Ladeeinrichtung 10 einen Ladebalkon 20 auf, welcher sich senkrecht über eine Frontseite 22 der Ladeeinrichtung 10 hinaus erstreckt. Der Ladebalkon 20 umfasst einen Ladebalken 24, an welchen ein gewünschter Lagergutträger 14' zur Entnahme beziehungsweise Ablage von Lagergut heranführbar ist und von welchem aus der Lagergutträger 14' dann zugänglich ist.

Wie in Figur 1 erkennbar, erstreckt sich der Ladebalken 24 im Bereich der Ladeöffnung 18 horizontal über eine Entnahmebreite beziehungsweise eine Ladebreite.

Im Bereich der Ladeöffnung 18 weist die Ladeeinrichtung 10 eine verlagerbare Wiegeeinrichtung 26 auf. Die Wiegeeinrichtung 26 ist entlang des Ladebalkens 24 über dessen gesamte Ladebreite horizontal verlagerbar. Die Verlagerung erfolgt dabei entlang einer Verlagerungsrichtung 28, welche sich parallel zu dem Ladebalken 24 erstreckt.

Zur Führung der Verlagerung weist der Ladebalken 24 eine Führungseinrichtung 30 in Form einer nicht näher dargestellten Schiene auf. Die Führungseinrichtung 30 erstreckt sich ebenfalls entlang des Ladebalkens 24 über die Ladebreite, so dass die Wiegeeinrichtung 26 entlang der Führungseinrichtung 30 parallel zu der Verlagerungsrichtung 28 bewegbar ist.

Hierzu weist die Wiegeeinrichtung 26 einen nicht näher dargestellten Schlittenabschnitt auf, welcher in eine entsprechend ausgebildete Schiene der Führungseinrichtung 30 eingreift und an bzw. auf dieser gleitet.

Zur Verlagerung der Wiegeeinrichtung 26 weist die Lagereinrichtung 10 ferner eine Mitnehmereinrichtung 32 auf. Diese Mitnehmereinrichtung 32 kann beispielsweise einen nicht näher dargestellten, im Bereich der Führungseinrichtung 30 umlaufenden Zahnriemen umfassen, an dem die Wiegeeinrichtung 26 derart befestigt ist, dass durch einen Hin- und Herlauf des Zahnriemens die Wiegeeinrichtung 26 entlang der Verlagerungsrichtung 28 hin- und herbewegbar ist.

Im Bereich der beiden Endabschnitte, welche der Ladebalkon 20 entlang der Verlagerungsrichtung 28 aufweist, sind plattenartige Seitenwangen 34 vorgesehen, welche sich entlang der Ladeöffnung 18 und senkrecht zur Erstreckungsrichtung des Ladebalkens 24 erstrecken. Durch die Seitenwangen 34 kann beispielsweise vermieden werden, dass ein Zugriff auf die Ladeöffnung 18 nicht wie gewünscht in einer Richtung senkrecht auf die Frontseite 22 erfolgt. An den Seitenwangen 34 ist eine Lichtschrankeneinrichtung 36 vorgesehen, welche sich ausgehend von dem Ladebalken 24 über die gesamte Höhe der Ladeöffnung 18 erstreckt. Die Lichtschrankeneinrichtung 36 umfasst eine Vielzahl von Einzellichtschanken, deren nicht dargestellter Strahlengang sich parallel zu dem Verlauf des Ladebalkens 24 und somit der Verlagerungsrichtung 28 erstreckt.

Die Lagereinrichtung 10 weist ferner eine Steuereinrichtung 60 auf. Diese kann eine Bedieneinrichtung 62 umfassen. Steuereinrichtung 60 und Bedieneinrichtung 62 sind im Beispiel der Figur 1 im Bereich der Frontseite 22 an dem Ladebalkon 20 derart angeordnet, dass sie einer Bedienperson bequem zugänglich sind. Die Steuereinrichtung 60 kann jedoch auch an einem anderen Ort, insbesondere im Inneren der Lagereinrichtung 10 oder in einem von der Lagereinrichtung 10 räumlich getrennten Rechner angeordnet sein.

Über die Bedieneinrichtung 62 kann eine Anforderung eines gewünschten ausgewählten Lagergutträgers 14' erfolgen. In der Steuereinrichtung 60 sind für die Lagergutträger 14 Informationen hinsichtlich des entnommenen oder abgelegten Lagergutes oder Informationen über den Bestand (Menge, Gewicht, usw.) eines jeweiligen Lagergutes hinterlegbar. Außerdem kann die Steuereinrichtung 60 die Mitnehmereinrichtung 32 zur kontrollierten Verlagerung der Wiegeeinrichtung 26 zu einer geeigneten Entnahmeposition steuern.

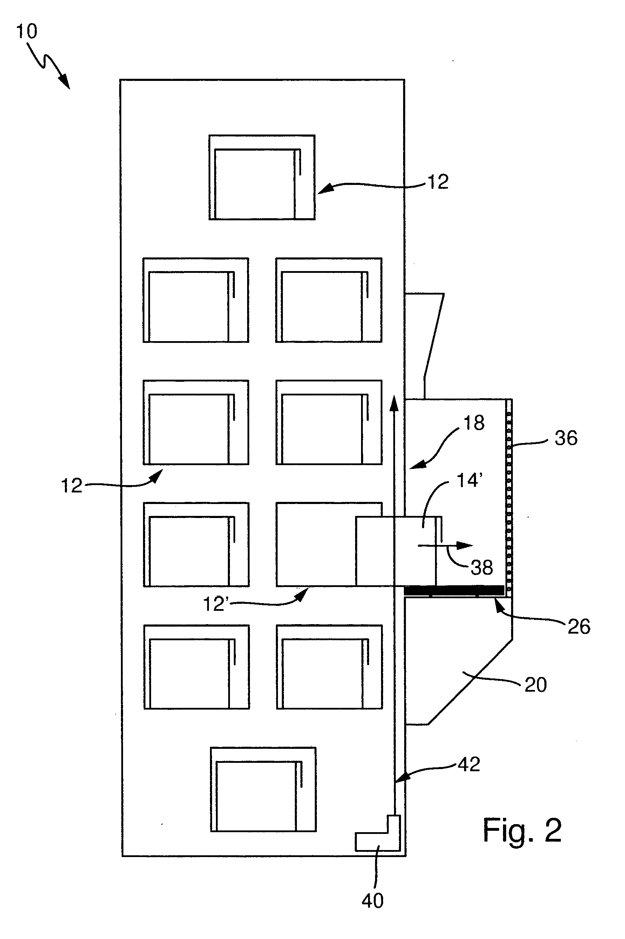

Die Figur 2 stellt einen Querschnitt durch die Lagereinrichtung 10 senkrecht zu der Frontseite 22 entlang der Linie A-A (vgl. Fig. 1) dar. Wie in diesem Querschnitt angedeutet, umfasst die Lagereinrichtung 10 eine Mehrzahl von Sammelträgern 12, welche in der Art eines Umlauf-Regals nach dem Paternosterbetrieb in der Lagereinrichtung aufgenommen sind. Wird bei der Lagereinrichtung 10 Zugriff auf einen bestimmten, ein bestimmtes Lagergut beinhaltenden lagergutträger 14' gewünscht, so kann zunächst der Sammelträger 12', welcher den gewünschten Lagergutträger 14' enthält, in den Bereich der Ladeöffnung 18 bewegt werden. Eine Anforderung eines gewünschten Lagergutträgers 14' kann beispielsweise über die in Figur 2 nicht näher dargestellte Bedieneinrichtung 62 erfolgen.

Der gewünschte Lagergutträger 14' kann dann in eine Zufuhrrichtung 38 aus dem Sammelträger 12' in Richtung des Ladebalkons 20 gezogen werden. Die Zufuhrrichtung 38 erstreckt sich dabei senkrecht zu der Verlagerungsrichtung 28 der Wiegeeinrichtung 26.

Bevor der gewünschte Lagergutträger 14' jedoch aus dem Sammelträger 12' gezogen wird, erfolgt mittels der Mitnehmereinrichtung 32 eine Verlagerung der Wiegeeinrichtung 26 entlang der Verlagerungsrichtung 28 zu einer geeigneten Entnahmeposition derart, dass der Lagergutträger 14' zur Bestimmung seines Gewichtes auf die Wiegeeinrichtung 26 gezogen werden kann.

Wie in der Figur 2 ferner angedeutet, ist ein Laserscanner 40 vorgesehen, welcher im Innenraum der Lagereinrichtung 10 in einem Fußbereich unterhalb des Ladebalkons 20 angeordnet ist. Der Laserscanner 40 wirkt in eine Scan-Richtung 42 derart, dass Hindernisse für einen Laser-Strahlengang in der von der Scan-Richtung 42 und der Verlagerungsrichtung 28 aufgespannten Ebene detektiert sind beziehungsweise erkannt werden können. Der Laserscanner 40 dient damit der Überwachung eines Bereiches in der Ladeöffnung 18, welcher von dem durch die Lichtschrankeneinrichtung 36 überwachten Bereich abweicht. Mittels des Laserscanners 40 ist insbesondere feststellbar, welcher der auf dem Sammelträger 12' entlang der Verfahrrichtung 28 nebeneinander angeordneten Lagergutträger 14 in Richtung des Ladebalkons 20 gezogen wird. Somit kann überwacht werden, ob es sich dabei um den gewünschten Lagergutträger 14' handelt.

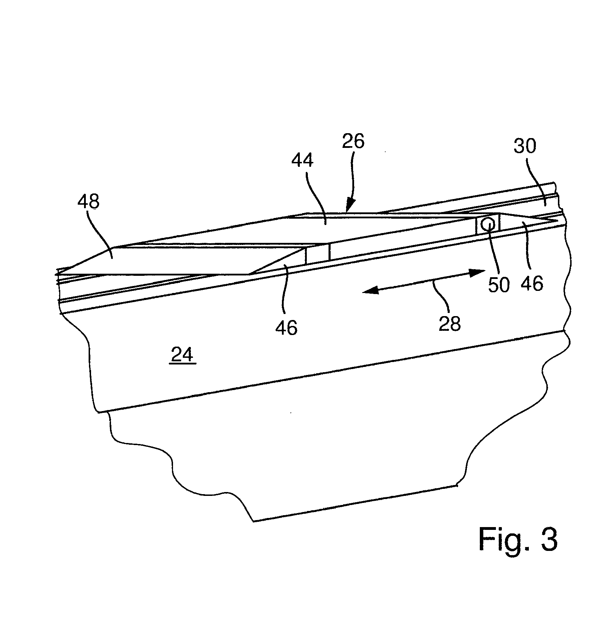

Die Figur 3 zeigt einen Ausschnitt aus der in Fig. 1 und 2 dargestellten Lagereinrichtung 10 mit der Wiegeeinrichtung 26 im Detail. Hierbei ist erkennbar, dass die Wiegeeinrichtung 26 eine Wiegeauflage 44 aufweist, auf welche der zu wiegende Lagergutträger 14' zu seiner Gewichtsbestimmung gezogen werden kann. Die Wiegeauflage 44 ist als sich in der horizontalen Ebene erstreckende Wiegeplattform ausgebildet. Dabei sind die Abmessungen der Wiegeauflage 44 derart gewählt, dass ein Lagergutträger 14 so auf die Wiegeeinrichtung 26 gezogen werden kann, dass er mit seiner Bodenfläche (Auflagefläche) vollständig auf der Wiegeauflage 44 aufliegt.

Die Wiegeeinrichtung 26 weist in ihren Randabschnitten entlang der Verlagerungsrichtung 28 Anfahrschrägen 46 auf, wobei jede Anfahrschräge 46 eine Oberfläche 48 aufweist, welche ausgehend von der Wiegeauflage 44 auf die Führungseinrichtung 30 hin schräg zuläuft. Dadurch wird vermieden, dass bei Verlagerung der Wiegeeinrichtung 26 entlang der Verlagerungsrichtung 28 ein Spalt gebildet wird, in welchen Gegenstände oder beispielsweise die Hand einer Bedienperson eingeklemmt werden könnte.

Die Wiegeeinrichtung 26 weist ferner eine als Taste ausgebildete Bestätigungseinrichtung 50 auf, welche zum Starten eines Wiegevorgangs zu betätigen ist.

Ein Wiegevorgang zur Bestimmung des Gewichts eines der Wiegeeinrichtung 26 zugeführten Lagergutträgers 14 kann nach einer Ausführungsform nur erfolgen, wenn zunächst mittels des Laserscanners 40 detektiert wird, dass der gewünschte Lagergutträger 14' aus dem Sammelträger 12' herausgezogen wurde, und dass der Lagergutträger 14' vollständig auf der Wiegeauflage 44 aufliegt. Außerdem ist nach dieser Ausführungsform für den Beginn des Wiegevorgangs erforderlich, dass mittels der Lichtschrankeneinrichtung 36 kein Hindernis detektiert wird, insbesondere dass die Bedienperson nicht mehr in den Bereich der Ladeöffnung 18 eingreift und/oder sich nicht auf der Wiegeeinrichtung 26 abstützt. Schließlich ist bei dieser Ausführungsform Voraussetzung für den Beginn des Wiegevorgangs, dass die Bestätigungseinrichtung 50 betätigt wurde. So kann beispielsweise vorgesehen sein, dass der Wiegevorgang automatisch eine Wartedauer nach Betätigung der Bestätigungseinrichtung 50 (zum Beispiel nach drei Sekunden) startet, sofern die Lichtschrankeneinrichtung 36 und der Laserscanner 40 keine Hindernisse detektieren, wie vorstehend erläutert.

Allerdings ist es nicht zwingend, dass ein Wiegevorgang nur bei Erfüllung aller drei genannten Bedingungen erfolgen kann (Lichtschrankeneinrichtung 36 frei, Laserscanner 40 detektiert kein Hindernis und Bestätigungseinrichtung 50 wurde betätigt). So sind Anwendungen denkbar, bei denen zum Start eines Wiegevorgangs eine Betätigung der Taste 50 genügt oder nur der Laserscanner 40 beziehungsweise nur die Lichtschrankeneinrichtung 36 detektiert, dass kein Hindernis vorliegt.

## Patentansprüche

1. Lagereinrichtung (10) mit in oder auf Sammelträgern (12) anordenbaren Lagergutträgern (14) für Lagergut und mit einer Ladeöffnung (18), wobei zur Entnahme bzw. Ablage von Lagergut einer der Sammelträger (12') an die Ladeöffnung (18) heranführbar ist, so dass Zugriff auf die Lagergutträger (14) durch eine Bedienperson erfolgen kann,
**dadurch gekennzeichnet, dass** eine im Bereich der Ladeöffnung (18) verlagerbare Wiegeeinrichtung (26) zur Gewichtsmessung vorgesehen ist, wobei der Wiegeeinrichtung (26) ein Lagergutträger (14) aus der Ladeöffnung (18) zur Messung seines Gewichts zuführbar ist,
und dass eine Steuereinrichtung (60) vorgesehen ist, in welcher für einen der Wiegeeinrichtung (26) zugeführten Lagergutträger (14) diesem zugeordnete Informationen hinsichtlich des gemessenen Gewichts hinterlegbar sind, so dass bei jedem Zugriff auf den Lagergutträger eine Bestandsführung des Lagergutes durch die Steuereinrichtung (60) erfolgen kann.

2. Lagereinrichtung nach Anspruch 1, **dadurch gekennzeichnet, dass** in der Steuereinrichtung (60) für jeden Lagergutträger (14) der Lagereinrichtung Informationen hinsichtlich des entnommenen oder abgelegten Lagergutes, insbesondere gemessenes Gewicht, hinterlegbar sind.

3. Lagereinrichtung (10) nach Anspruch 1 oder 2, **dadurch gekennzeichnet, dass** eine Lichtschrankeneinrichtung (36) zur Detektion von sich im Bereich der Ladeöffnung (18) befindlichen Hindernissen vorgesehen ist.

4. Lagereinrichtung (10) nach dem vorhergehenden Anspruch, **dadurch gekennzeichnet, dass** die Lichtschrankeneinrichtung (36) derart angeordnet ist, dass ein Zugriff auf einen der Wiegeeinrichtung (26) zugeführten Lagergutträger (14) detektierbar ist.

5. Lagereinrichtung (10) nach einem der vorhergehenden Ansprüche, **dadurch gekennzeichnet, dass** ein Laserscanner (40) zur Erkennung von Hindernissen im Bereich der Ladeöffnung (18) vorgesehen ist.

6. Lagereinrichtung nach dem vorhergehenden Anspruch, **dadurch gekennzeichnet, dass** der Laserscanner (40) derart angeordnet ist, dass die Zugriffsposition auf einen Lagergutträger (14), insbesondere auf einen der Wiegeeinrichtung (26) zugeführten Lagergutträgers (14) erkennbar ist.

7. Lagereinrichtung (10) nach einem der vorhergehenden Ansprüche, **dadurch gekennzeichnet, dass** die Wiegeeinrichtung (26) eine zum Start einer Gewichtsmessung betätigbare Bestätigungseinrichtung (50), insbesondere Taste, aufweist.

8. Lagereinrichtung (10) nach dem vorhergehenden Anspruch, **dadurch gekennzeichnet, dass** die Wiegeeinrichtung (26) derart mit der Steuereinrichtung (60) zusammenwirkt, dass aufgrund einer Betätigung der Bestätigungseinrichtung (50) eine Gewichtsmessung auslösbar ist und Messergebnisse der Gewichtsmessung an die Steuereinrichtung (60) übertragbar sind.

9. Lagereinrichtung (10) nach einem der vorhergehenden Ansprüche, **dadurch gekennzeichnet, dass** eine von der Steuereinrichtung (60) ansteuerbare Mitnehmereinrichtung (32) zum Verlagern der Wiegeeinrichtung (26), insbesondere zu der gewünschten Entnahmeposition, vorgesehen ist.

10. Lagereinrichtung nach einem der vorhergehenden Ansprüche, **dadurch gekennzeichnet, dass** die Wiegeeinrichtung (26) eine Kommunikationseinrichtung zur insbesondere drahtlosen Übermittlung von Informationen hinsichtlich des zu entnehmenden oder abzulegenden Lagergutes, insbesondere Gewicht, mit der Steuereinrichtung aufweist.

11. Lagereinrichtung nach einem der vorhergehenden Ansprüche, **dadurch gekennzeichnet, dass** eine Signaleinrichtung vorgesehen ist, welche von der Steuereinrichtung (60) zur Abgabe eines Warnsignals aktivierbar ist, wenn ein anderer als ein ausgewählter Lagergutträger (14') der Wiegeeinrichtung (26) zugeführt wurde und/oder wenn ein Zugriff auf einen anderen als einen ausgewählten Lagergutträger (14') erfolgt.

12. Lagereinrichtung nach einem der vorhergehenden Ansprüche, **dadurch gekennzeichnet, dass** eine Gewichtsmessung und/oder eine Hinterlegung von Informationen in der Steuereinrichtung (60) dann unterbunden wird, wenn ein anderer als ein ausgewählter Lagergutträger (14') der Wiegeeinrichtung zugeführt wird.

13. Lagereinrichtung nach einem der vorhergehenden Ansprüche, **dadurch gekennzeichnet, dass** die Wiegeeinrichtung (26) derart ausgebildet ist, dass ihre Verlagerung unterbunden wird, wenn ihr ein Lagergutträger (14) zugeführt ist.

14. Lagereinrichtung nach einem der vorhergehenden Ansprüche, **dadurch gekennzeichnet, dass** die Wiegeeinrichtung (26) und/oder die Ladeöffnung (18) derart ausgebildet ist, dass eine Zufuhr eines ausgewählten Lagergutträgers (14') zur Wiegeeinrichtung (26) nur dann möglich ist, wenn die Wiegeeinrichtung (26) zu einer dem ausgewählten Lagergutträger (14') zugeordneten Entnahmeposition verfahren ist.

15. Verfahren zur Bestandsüberwachung für eine Lagereinrichtung (10) mit in Sammelträgern (12) anordenbaren Lagergutträgern (14) für Lagergut und mit einer Ladeöffnung (18), über welche zur Entnahme bzw. Ablage von Lagergut Zugriff auf einen der Lagergutträger (14) durch eine Bedienperson erfolgen kann, und mit einer im Bereich der Ladeöffnung (18) verlagerbaren Wiegeeinrichtung (26), welcher ein Lagergutträger (14) aus der Ladeöffnung (18) zur Messung seines Gewichts zuführbar ist, umfassend die folgenden Schritte:
- Auswahl eines vorgebbaren Lagergutträgers (14');
- Heranführen einer der Sammelträger (12'), in welchem der vorgegebene Lagergutträger (14') angeordnet ist, zu der Ladeöffnung (18);
- Verlagern der Wiegeeinrichtung (26) zu einer dem ausgewählten Lagergutträger (14') zugeordneten Entnahmeposition;
- Zufuhr des Lagergutträgers (14') zur Wiegeeinrichtung (26);
- Entnahme oder Ablage von Lagergut aus oder in dem Lagergutträger (14') durch eine Bedienperson;
- Messung des Gewichts des Lagergutträgers (14').

16. Verfahren nach Anspruch 15, **dadurch gekennzeichnet, dass** eine erste Gewichtsmessung vor der Entnahme oder Ablage von Lagergut erfolgt und eine zweite Gewichtsmessung nach der Entnahme oder Ablage von Lagergut erfolgt.

17. Verfahren nach Anspruch 15 oder 16, **dadurch gekennzeichnet, dass** ein Warnsignal abgegeben wird, wenn ein anderer als der ausgewählte Lagergutträger (14') der Wiegeeinrichtung (26) zugeführt wird.

## Claims

1. A storage system (10), having containers (14) for stored material that can be located in or on collection containers (12) and having a loading opening (18), wherein for removing or depositing stored material, one of the collection containers (12') can be brought to the loading opening (18) so that access to the containers (14) for stored material by a human operator can be gained,
**characterized in that** a weighing device (26) that can be shifted into the vicinity of the loading opening (18) is provided for weight measurement, and a container (14) for stored material can be delivered to the weighing device (26) from the loading opening (18) so that the weight of the container can be measured,
and that a control device (60) is provided, in which information relating to the measured weight and associated with a container (14) for stored material delivered to the weighing device (26) can be stored in memory, so that every time the container for stored material is accessed, the stored material can be inventoried by the control device (60).

2. The storage system of claim 1, **characterized in that** for each container (14) for stored material, information relating to the removed or deposited stored material, and in particular its measured weight, can be stored in memory in the control device (60).

3. The storage system (10) of claim 1 or 2, **characterized in that** a photoelectric barrier (36) for detecting obstacles located in the vicinity of the loading opening (18) is provided.

4. The storage system (10) of the foregoing claim, **characterized in that** the photoelectric barrier (36) is located such that an access to a container (14) for stored material delivered to the weighing device (26) is detectable.

5. The storage system (10) of one of the foregoing claims, **characterized in that** a laser scanner (40) is provided for detecting obstacles in the vicinity of the loading opening (18).

6. The storage system of the foregoing claim, **characterized in that** the laser scanner (40) is located such that the position for access to a container (14) for stored material, in particular to a container (14) for stored material delivered to the weighing device (26), is detectable.

7. The storage system (10) of one of the foregoing claims, **characterized in that** the weighing device (26) has a confirmation device (50), in particular a key, which is actuatable for starting a weight measurement.

8. The storage system (10) of the foregoing claim, **characterized in that** the weighing device (26) cooperates with the control device (60) in such a manner than on the basis of an actuation of the confirmation device (50), a weight measurement can be tripped, and the results of the weight measurement can be transmitted to the control device (60).

9. The storage system (10) of one of the foregoing claims, **characterized in that** a slaving device (32) that is triggerable by the control device (60) is provided for shifting the position of the weighing device (26), in particular to the desired removal position.

10. The storage system of one of the foregoing claim, **characterized in that** the weighing device (26) has a communication device for transmitting information, in particular in wireless fashion, relating to the stored material to be removed or to be deposited, in particular its weight, to the control device.

11. The storage system of one of the foregoing claims, **characterized in that** a signal device is provided, which is activatable by the control device (60) for outputting a warning signal if any other than a selected container (14') for stored material has been delivered to the weighing device (26) and/or if access has been gained to any other than a selected container (14') for stored material.

12. The storage system of one of the foregoing claims, **characterized in that** a weight measurement and/or storage in memory of information in the control device (60) is prevented whenever any other than a selected container (14') for stored material is delivered to the weighing device.

13. The storage system of one of the foregoing claims, **characterized in that** the weighing device (26) is embodied such that shifting of its position is prevented if a container (14) for stored material is delivered to it.

14. The storage system of one of the foregoing claims, **characterized in that** the weighing device (26) and/or the loading opening (18) is embodied such that a delivery of a selected container (14') for stored material to the weighing device (26) is possible only whenever the weighing device (26) has moved to a removal position associated with the selected container (14') for stored material.

15. A method for inventory monitoring for a storage system (10), having containers (14) for stored material that can be located in collection containers (12) and having a loading opening (18) by way of which, for removing or depositing stored material, access to one of the containers (14) for stored material by a human operator can be gained, and having a weighing device (26) that can be shifted into the vicinity of the loading opening (18), to which weighing device a container (14) for stored material can be delivered from the loading opening (18) so that the weight of the container can be measured, including the following steps:
- selecting a specifiable container (14') for stored material;
- bringing one of the collection containers (12'), in which the specified container (14') for stored material is located, to the loading opening (18);
- shifting the weighing device (26) to a removal position associated with the selected container (14') for stored material;
- delivering the container (14') for stored material to the weighing device (26);
- removing or depositing stored material from or into the container (14') for stored material by a human operator;
- measuring the weight of the container (14') for stored material.

16. The method of claim 15, **characterized in that** a first weight measurement is done before the removal or deposition of stored material, and a second weight measurement is done after the removal or deposition of stored material.

17. The method of claim 15 or 16, **characterized in that** a warning signal is output if any other than the selected container (14') for stored material is delivered to the weighing device (26).

## Revendications

1. Dispositif de stockage (10) muni de supports de stockage (14), destinés à des éléments devant être stockés, qui peuvent être disposés dans ou sur un support de regroupement (12), et d'une ouverture de chargement (18), dans lequel, pour le retrait ou l'entreposage d'un élément devant être stocké, un des supports de regroupement (12') peut être amené au niveau de l'ouverture de chargement (18), pour permettre ainsi un accès au support de stockage (14) à un opérateur,
**caractérisé en ce qu'**un dispositif de pesage (26) pouvant être déplacé dans la zone de l'ouverture de chargement (18) pour effectuer une pesée est prévu, un support de stockage (14) pouvant être fourni au dispositif de pesage (26) à l'extérieur de l'ouverture de chargement (18) pour la mesure de son poids,
et **en ce qu'**un dispositif de commande (60) est prévu, dans lequel des informations concernant le poids mesuré sont mémorisées, associées à un support de stockage (14) fourni au dispositif de pesage (26), de telle sorte qu'à chaque accès au support de stockage, une gestion des stocks d'éléments devant être stockés va pouvoir avoir lieu au moyen du dispositif de commande (60).

2. Dispositif de stockage selon la revendication 1, **caractérisé en ce que** des informations concernant l'élément devant être stocké enlevé ou entreposé, en particulier le poids mesuré, sont mémorisées dans le dispositif de commande (60) pour chaque support de stockage (14) du dispositif de stockage.

3. Dispositif de stockage (10) selon la revendication 1 ou 2, **caractérisé en ce qu'**un dispositif barrière photoélectrique (36) est prévu, pour détecter des obstacles se trouvant à proximité de l'ouverture de chargement (18).

4. Dispositif de stockage (10) selon l'une quelconque des revendications précédentes, **caractérisé en ce que** le dispositif barrière photoélectrique (36) est agencé de telle sorte qu'un accès à un support de stockage (14) fourni à un dispositif de pesage (26) peut être détecté.

5. Dispositif de stockage (10) selon l'une quelconque des revendications précédentes, **caractérisé en ce qu'**un laser à balayage (40) est prévu, pour identifier des obstacles dans la zone de l'ouverture de chargement (18).

6. Dispositif de stockage selon l'une quelconque des revendications précédentes, **caractérisé en ce que** le laser à balayage (40) est agencé de telle sorte que la position d'accès à un support de stockage (14) peut être identifiée, en particulier à un support de stockage (14) fourni au dispositif de pesage (26).

7. Dispositif de stockage (10) selon l'une quelconque des revendications précédentes, **caractérisé en ce que** le dispositif de pesage (26) comporte un dispositif de confirmation (50) pouvant être actionné pour démarrer une mesure de poids, en particulier une touche.

8. Dispositif de stockage selon l'une quelconque des revendications précédentes, **caractérisé en ce que** que le dispositif de pesage (26) coopère avec le dispositif de commande (60), et **en ce qu'**en raison d'une confirmation de la part du dispositif de confirmation (50), une mesure de poids peut être déclenchée, et les résultats de la mesure de poids peuvent être transmis au dispositif de commande (60).

9. Dispositif de stockage selon l'une quelconque des revendications précédentes, **caractérisé en ce qu'**un dispositif de préhension (32) pouvant être dirigé par le dispositif de commande (60) est prévu, pour déplacer le dispositif de pesage (26), en particulier jusqu'à la position d'enlèvement souhaitée.

10. Dispositif de stockage selon l'une quelconque des revendications précédentes, **caractérisé en ce que** le dispositif de pesage (26) comporte un dispositif de communication, en particulier pour la transmission sans fil au dispositif de commande d'informations relatives aux éléments devant être stockés enlevés ou entreposés, notamment le poids.

11. Dispositif de stockage selon l'une quelconque des revendications précédentes, **caractérisé en ce qu'**un dispositif de signalisation est prévu, qui peut être activé par le dispositif de commande (60) pour délivrer un signal d'avertissement si un support de stockage autre qu'un support de stockage sélectionné (14') est fourni au dispositif de pesage (26), et/ou lorsqu'un accès à un support de stockage autre qu'un support de stockage sélectionné (14') a lieu.

12. Dispositif de stockage selon l'une quelconque des revendications précédentes, **caractérisé en ce qu'**une mesure de poids et/ou une mémorisation d'informations dans le dispositif de commande (60) va être stoppée lorsqu'un support de stockage autre qu'un support de stockage sélectionné (14') va être fourni au dispositif de pesage.

13. Dispositif de stockage selon l'une quelconque des revendications précédentes, **caractérisé en ce que** le dispositif de pesage (26) est réalisé de telle manière que son déplacement va être stoppé lorsqu'un support de stockage (14) va lui être fourni.

14. Dispositif de stockage selon l'une quelconque des revendications précédentes, **caractérisé en ce que** le dispositif de pesage (26) et/ou l'ouverture de chargement (18) est formé(e) de telle sorte que la fourniture d'un support de stockage sélectionné (14') au dispositif de pesage (26) n'est possible que lorsque le dispositif de pesage (26) est déplacé jusqu'à une position d'enlèvement associée au support de stockage sélectionné (14').

15. Procédé de contrôle des stocks destiné à un dispositif de stockage (10), ayant des supports de stockage (14) pouvant être agencés dans un support de regroupement (12), pour des éléments devant être stockés, et ayant une ouverture de chargement (18) à travers laquelle un accès à l'un des supports de stockage (14) par un opérateur, pour l'enlèvement ou l'entreposage des éléments devant être stockés, va pouvoir avoir lieu, et ayant un dispositif de pesage (26) pouvant être déplacé dans la zone de l'ouverture de chargement (18), auquel un support de stockage (14) peut être fourni à travers l'ouverture de chargement (18) pour la mesure de son poids, comprenant les étapes consistant à :
- sélectionner un support de stockage prédéterminé (14') ;
- faire avancer un support de regroupement (12'), dans lequel est disposé le support de stockage prédéterminé (14'), jusqu'à l'ouverture de chargement (18) ;
- déplacer le dispositif de pesage (26) jusqu'à une position d'enlèvement associée au support de stockage sélectionné (14') ;
- fournir le support de stockage (14') au dispositif de pesage (26) ;
- enlever des éléments devant être stockés du support de stockage (14'), ou y stocker des éléments devant être stockés ;
- mesurer le poids du support de stockage (14').

16. Procédé selon la revendication 15, **caractérisé en ce qu'**une première mesure de poids a lieu avant l'enlèvement ou l'entreposage des éléments devant être stockés, et une seconde mesure de poids a lieu après l'enlèvement ou l'entreposage des éléments devant être stockés.

17. Procédé selon la revendication 15 ou 16, **caractérisé en ce qu'**un signal d'avertissement est émis lorsqu'un support de stockage autre que le support de stockage sélectionné (14') est fourni au dispositif de pesage.
